# EUROPEAN PATENT APPLICATION

(11) **EP 4 682 302 A1**
(43) Date of publication of application: **21.01.2026**
(21) Application number: 23926924.4
(22) Date of filing: 11.05.2023
(51) Int. Cl.: D06F 33/43, D06F 34/04

(54) **WASHING MACHINE AND CONTROL METHOD AND CONTROL DEVICE THEREFOR, AND STORAGE MEDIUM**

(30) Priority: 14.03.2023 CN 202310260950
(71) Applicant: TCL Home Appliances (Hefei) Co., Ltd., Hefei, Anhui 230601 (CN)
(72) Inventor: PAN, Guanghui, Hefei, Anhui 230601 (CN); WANG, Zhongqing, Hefei, Anhui 230601 (CN); YU, Yonggang, Hefei, Anhui 230601 (CN)
(74) Representative: Herrero & Asociados, S.L.
(86) International application number: PCT/CN2023/093681
(87) International publication number: WO 2024/187574

(57) **Abstract**

A washing machine and a control method and control device therefor, and a storage medium. The control method comprises: in a rinsing stage or after the rinsing stage is completed, controlling the water level in an outer tub to reach a cleaning water level; and controlling an inner drum to rotate so as to drive a water flow to agitate between the inner drum and the outer tub to wash the outer surface of the inner drum and the inner surface of the outer tub. Therefore, the deposition of dirt is reduced, and the cleaning effect is improved; additionally, program design is simplified, and the influence on washed clothes is reduced.

## Description

This application claims priority to Chinese Patent Applications No. 202310260950.7, filed on March 14, 2023 and entitled "WASHING MACHINE AND CONTROL METHOD AND CONTROL DEVICE THEREFOR, AND STORAGE MEDIUM". The entire disclosures of the above application are incorporated herein by reference.

### TECHNICAL FIELD

The present application relates to the technical field of washing machines, and in particular, relates to a washing machine and a control method, a control device therefor, and a storage medium.

### BACKGROUND TECHNOLOGY

With the continuous advancement of washing machines, such as drum washing machines, and increasing demands of users, consumers now have higher expectations for laundry cleanliness. Cleanliness of a laundry is not only related to washing programs set in a washing machine and an amount of detergent used but is also closely related to the cleanliness of space between an inner drum and an outer drum. There is a gap between the inner drum and the outer drum, where dirty washing water carrying stains can easily adhere to an outer surface of the inner drum and an inner surface of the outer drum. If not cleaned in time, such dirt may reattach to the laundry, causing secondary contamination.

### Technical problem

In the related art, to reduce inconvenience of disassembling a washing machine to clean a dirt between an inner drum and an outer drum, a separate drum cleaning program is typically set for washing machines. However, since the drum cleaning program operates at fixed intervals, dirt accumulation still occurs, leading to poor cleaning results.

### SUMMARY OF INVENTION

Embodiments of the present application provide a washing machine and a control method, a control device therefor, and a storage medium, which can remove dirt between an inner drum and an outer drum during every washing process, thereby reducing dirt accumulation and improving cleaning effectiveness.

An embodiment of the present application provides a control method for a washing machine, wherein the washing machine comprises an inner drum and an outer drum sleeved outside the inner drum, and the inner drum is used to carry a laundry. The control method comprises:
In a rinsing stage or after the rinsing stage is completed, controlling a water level in the outer drum to reach a cleaning water level.

Controlling the inner drum to rotate so as to drive a water flow to agitate between the inner drum and the outer drum to wash an outer surface of the inner drum and an inner surface of the outer drum.

An embodiment of the present application provides a control device for a washing machine, wherein the washing machine comprises an inner drum and an outer drum sleeved outside the inner drum, the inner drum is used to carry a laundry. The control device comprises:
A controller configured to, in a rinsing stage or after the rinsing stage is completed, control a water level in the outer drum to reach a cleaning water level.

A rinsing component configured to control the inner drum to rotate so as to drive a water flow to agitate between the inner drum and the outer drum to wash an outer surface of the inner drum and an inner surface of the outer drum.

An embodiment of the present application further provides a computer-readable storage medium storing a computer program, wherein when the computer program is executed on a computer, a computer executes any of the control method for the washing machines described above.

An embodiment of the present application further provides a washing machine comprising:
An inner drum configured to carry a laundry.

An outer drum sleeved outside the inner drum.

A processor electrically connected to the inner drum, wherein the processor is configured to execute any of the control method for the washing machines described above.

### Advantageous effect

The washing machine and the control method, the control device therefor, and the storage medium provided in the embodiments of the present application allow the outer surface of the inner drum and the inner surface of the outer drum to be rinsed during each washing process, instead of relying on a fixed-cycle cleaning program. This reduces dirt accumulation and improves cleaning effectiveness. Furthermore, as there is no need for a separate drum cleaning program, the program design is simplified, and impact on the cleaned laundry is minimized.

### BRIEF DESCRIPTION OF THE DRAWINGS

To more clearly illustrate the technical solutions in the embodiments of the present application, a brief introduction to the accompanying drawings required in the description of the embodiments is provided below. It is evident that the accompanying drawings described below are merely some embodiments of the present application. For those skilled in the art, other drawings may also be obtained based on these drawings without requiring inventive effort.

For a more complete understanding of the present application and its beneficial effects, the following description is provided in conjunction with the accompanying drawings. In the following description, the same reference numerals denote the same components.
FIG. 1 is a schematic diagram of a first process of a control method for a washing machine provided in an embodiment of the present application.
FIG. 2 is a schematic diagram of a second process of a control method for a washing machine provided in an embodiment of the present application.
FIG. 3 is a schematic diagram of a third process of a control method for a washing machine provided in an embodiment of the present application.
FIG. 4 is a schematic diagram of a fourth process of a control method for a washing machine provided in an embodiment of the present application.
FIG. 5 is a schematic diagram of a first structural configuration of a control device for a washing machine provided in an embodiment of the present application.
FIG. 6 is a schematic diagram of a second structural configuration of a control device for a washing machine provided in an embodiment of the present application.
FIG. 7 is a schematic diagram of a structure of a washing machine provided in an embodiment of the present application.
FIG. 8 is a schematic diagram of a structure of an outer drum provided in an embodiment of the present application.
FIG. 9 is a schematic diagram of a structure of an inner drum provided in an embodiment of the present application.
FIG. 10 is a block diagram of a structure of a washing machine provided in an embodiment of the present application.

### DETAILED DESCRIPTION OF THE EMBODIMENTS

Technical solutions in embodiments of the present application will be clearly and completely described below in conjunction with the accompanying drawings in the embodiments of the present application. Apparently, the described embodiments are only a part of the embodiments of the present application, rather than all the embodiments. Based on the embodiments in the present application, all other embodiments obtained by those skilled in the art without paying creative efforts are within the scope of protection of the present application.

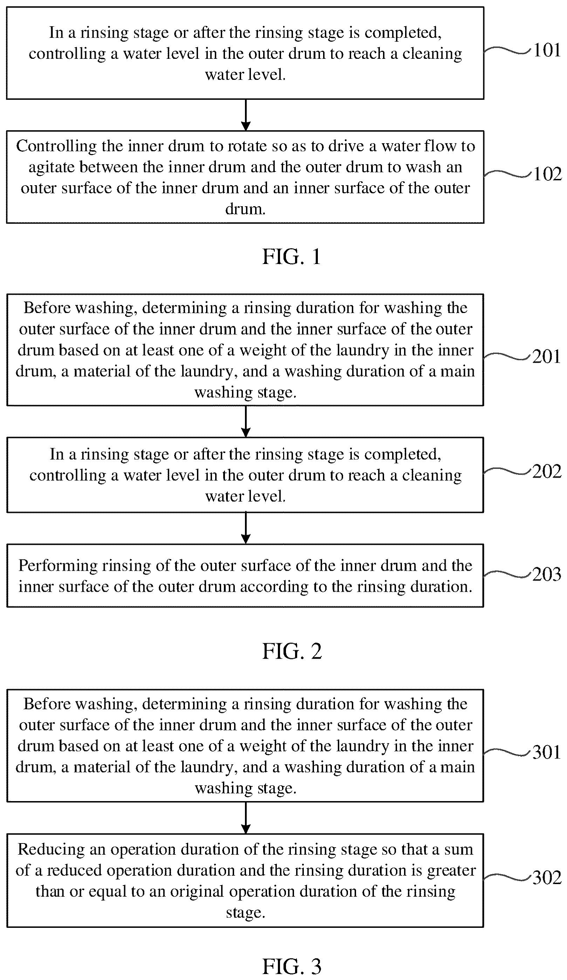

Please refer to FIG. 1, which is a schematic diagram of a first process of a control method for a washing machine provided in an embodiment of the present application. The present application provides a control method for a washing machine, wherein the washing machine may be a drum-type washing machine or a pulsator-type washing machine. The washing principles of pulsator-type and drum-type washing machines differ. In a pulsator-type washing machine, a bottom of a drum is equipped with a circular pulsator with protruding ridges. Under the action of the pulsator, water inside the drum forms vortices that rotate alternately in clockwise and counterclockwise directions, driving fabric to rotate and tumble. This motion effectively removes dirt from clothes. A drum-type washing machine, on the other hand, is designed to mimic the principle of a mallet beating fabric. During drum rotation, a significant centrifugal force is generated to perform repetitive movements, which, in conjunction with detergent and water, effectively cleans the clothes. It is understood that the washing machine may also be of other types, which are not exhaustively listed here. The present application takes the drum-type washing machine as an example for explanation and should not be understood as a limitation on the type of washing machine. Illustratively, the washing machine comprises an inner drum and an outer drum, where the inner drum is housed within the outer drum, and both are coaxially arranged. The inner drum can rotate relative to the outer drum. The inner drum is used to hold clothes, while the outer drum holds washing water. For instance, the inner drum may be provided with water-permeable holes, allowing water from the outer drum to enter the inner drum. Through the rotation of the inner drum, combined with detergent, the washing of clothes is achieved. The washing machine is not limited to the aforementioned components. It may also include a casing, a display panel, a motor, a rotating shaft, and other parts, which are not detailed here. The control method for the washing machine includes:
Step 101: In a rinsing stage or after the rinsing stage is completed, controlling a water level in the outer drum to reach a cleaning water level.

Due to gap between the inner drum and the outer drum, during a process in which water from the outer drum enters the inner drum through water-permeable holes of the inner drum, and conversely, when water from the inner drum flows into the outer drum through these holes, or more generally, during the circulation of washing water between the inner drum and outer drum, dirt removed from clothes may accumulate on an outer surface of the inner drum and/or an inner surface of the outer drum. If not promptly cleaned, the accumulated dirt may re-adhere to the clothes, causing secondary contamination.

In the related art, in order to reduce the cumbersome process of disassembling the washing machine for cleaning the inner drum and the outer drum, a separate drum cleaning program is provided. After the washing process is completed and the user removes the laundry, the drum is cleaned separately. However, the existing independent drum cleaning program has at least two problems. On one hand, a separate drum cleaning program needs to be designed, which complicates the control program of the washing machine. On the other hand, to reduce water resource waste, the drum cleaning program is typically performed at a fixed cycle, such as once every five washes. However, since the amount of dirt deposited on the drum varies with each cleaning cycle, using the same cleaning program may result in insufficient dirt removal. This leads to continuous dirt accumulation and a decline in cleaning effectiveness.

In order to reduce the occurrence of the above-mentioned problems, embodiments of the present application rinse the outer surface of the inner drum and the inner surface of the outer drum during each washing process. This reduces dirt accumulation and improves the cleaning effect of the drum.

Exemplarily, the outer surface of the inner drum and the inner surface of the outer drum may be rinsed during the rinsing phase or after the rinsing phase is completed. It should be noted that the washing program may include a main washing phase, a rinsing phase, and a spinning phase. The main washing phase is the phase in which impurities and dirt on the laundry are washed out. If the rinsing process of the outer surface of the inner drum and the inner surface of the outer drum is performed in this phase, dirt may still be deposited during subsequent washing, leading to incomplete cleaning. The spinning phase is the phase where the laundry has already been processed, and after spinning is completed, the laundry can be removed or undergo a drying process. Since water inflow is no longer appropriate at this stage, it is also not suitable to perform the rinsing of the outer surface of the inner drum and the inner surface of the outer drum during the spinning phase. In summary, during the rinsing phase or after the rinsing phase is completed, the laundry remains in a relatively high-humidity state, and most of the dirt on the laundry has already been washed out. Therefore, cleaning the drum during this process neither affects the laundry's processing state nor removes the dirt washed out during the washing process.

The process of rinsing the outer surface of the inner drum and the inner surface of the outer drum may include: during the rinsing phase or after the rinsing phase is completed, controlling the water level inside the outer drum to reach a cleaning water level. The cleaning water level refers to an appropriate water level height that enables effective cleaning of both the outer drum and the inner drum. This water level height can be determined through multiple experimental calibrations to achieve the optimal cleaning effect or can be set based on empirical values. Exemplarily, the cleaning water level may be higher than the water level during the rinsing phase. At the cleaning water level, the drum is cleaned by the cutting motion of the water flow driven by the rotation of the inner drum.

Step 102: Controlling the inner drum to rotate so as to drive a water flow to agitate between the inner drum and the outer drum to wash an outer surface of the inner drum and an inner surface of the outer drum.

The rinsing of the outer surface of the inner drum and the inner surface of the outer drum may be achieved by utilizing the movement of water flow driven by the rotation of the inner drum. It can be understood that by controlling the rotation of the inner drum, the movement of water flow between the inner drum and the outer drum can be induced, causing agitation that rinses the outer surface of the inner drum and the inner surface of the outer drum. At the cleaning water level, the inner drum's rotation drives the water flow to perform a cutting motion, thereby cleaning the drum.

The rotational speed of the inner drum may be a relatively high speed, such as a speed greater than or equal to 80 rpm. At this speed, the centrifugal force acting on the laundry is greater than its gravitational force, causing the laundry to adhere to the inner wall of the inner drum. This adhesion can block at least a portion of the water in the outer drum from entering the inner drum, thereby reducing the probability of dirt reattaching to the laundry.

In the control method for the washing machine provided in the embodiments of the present application, the outer surface of the inner drum and the inner surface of the outer drum are rinsed during each washing process rather than at a fixed cleaning cycle. This reduces dirt accumulation and improves the cleaning effect. Furthermore, since a separate drum cleaning program is not required, the program design can be simplified, and the impact on cleaned laundry can be minimized.

Referring to FIG. 1 and FIG. 2, wherein FIG. 2 is a schematic diagram of a second process of a control method for a washing machine provided in an embodiment of the present application. The embodiments of the present application further provide a control method for a washing machine, comprising:
Step 201: Before washing, determining a rinsing duration for washing the outer surface of the inner drum and the inner surface of the outer drum based on at least one of a weight of the laundry in the inner drum, a material of the laundry, and a washing duration of a main washing stage.

The rinsing duration for drum cleaning may be determined based on at least one of the following factors: the weight of the laundry inside the inner drum, the fabric type of the laundry, and the washing duration of the main washing phase. It should be noted that the dirt accumulated between the inner drum and the outer drum mainly includes fibers shed from the laundry. The amount of fiber shedding varies depending on the weight of the laundry; different fabric types correspond to different washing mechanical forces, which in turn result in different amounts of fiber shedding. For example, the washing mechanical force for a cotton-linen wash program differs from that for a four-piece bedding wash program. In the design of washing programs, the washing mechanical force is determined based on the fabric type. The washing duration also affects the amount of fiber shedding-the longer the washing duration, the greater the amount of fiber shed. Therefore, the rinsing duration for drum cleaning may be determined based on at least one of the weight of the laundry, the fabric type, and the washing duration of the main washing phase.

The weight of the laundry, the fabric type, and the washing duration of the main washing phase can all be determined before the washing process begins. For example, after the laundry is placed into the inner drum, the laundry can be weighed to obtain its weight. Additionally, the fabric type can be identified when the user selects a washing program, such as a cotton-linen wash or a four-piece bedding wash, or through the use of sensors, such as a camera capturing images of the laundry. The washing duration of the main washing program can then be calculated based on the set program. Therefore, before the washing process starts, the rinsing duration for cleaning the outer surface of the inner drum and the inner surface of the outer drum can be determined.

The embodiments of the present application determine the rinsing duration for drum cleaning using at least three methods, which will be described separately below.

First method: Determine the rinsing duration for drum cleaning based on the laundry weight. For example, the weight of the laundry inside the inner drum is obtained. If the laundry weight falls within a preset weight range, the first rinsing duration t1 is calculated based on the laundry weight WF1, the standard weight WF0, the standard rinsing duration t0, and a first coefficient k1, as shown in the following equation: t1=k1 *WF1/WF0*t0. The laundry weight WF1 is obtained by weighing the laundry. The standard weight WF0 is determined through experiments. For example, under the same laundry weight, different fabric types are tested, and the standard weight WF0 is calibrated for each fabric type. For instance, the standard weight WF0 may be set based on the half-load capacity of cotton fabric. For a washing machine model with a 10 kg capacity, the calibration may be performed at 5 kg. The rinsing duration t0 is determined based on the standard weight and may also be referred to as the standard rinsing duration, which can be obtained through multiple experiments. The first coefficient k1 is a time adjustment parameter based on fabric type. For example: For cotton fabric, k1=1. For synthetic fabrics, k1 is within the range of 0.6 to 1. For bulky items, k1 is within the range of 0.8 to 1.5. For down jackets, k1 is within the range of 0.4 to 0.8. For waterproof outdoor jackets, k1 is within the range of 0.3 to 0.7.

In some embodiments, the first rinsing duration may also be calculated based on the laundry weight, the standard weight, and the standard rinsing duration using the following formula: t1=WF1/WF0*t0. The parameters can be referenced from the above descriptions and will not be repeated here.

If the laundry weight falls outside the preset range or if the laundry weight is not obtained, the first rinsing duration is selected based on a preset weight. It can be understood that since the laundry weight exceeds the preset range, it is not possible to calculate the first rinsing duration using the above formula. Therefore, a preset weight may be used to determine the first rinsing duration. For example, a mapping table may be set, where exceeding the preset range but falling within a first range corresponds to a certain rinsing duration, exceeding the preset range but falling within a second range corresponds to another rinsing duration, and so on, to determine the first rinsing duration accordingly.

Second method: Determine the rinsing duration for drum cleaning based on the washing duration of the main washing phase. For example, the washing duration of the main washing phase t3, the fabric type of the laundry inside the inner drum, a first coefficient k1 for time adjustment based on fabric type, a second coefficient k2 for time adjustment based on the washing duration of the main washing phase, and a rinsing compensation duration t4 may be obtained. The second rinsing duration t2 is calculated based on the washing duration t3, the first coefficient k1, the second coefficient k2, and the rinsing compensation duration t4. For example, t2=k1×k2×t3+t4. The washing duration t3 in the main washing phase can be obtained from the set program once the fabric type is determined. The first coefficient k1 and the second coefficient k2 are time adjustment factors based on different parameters. For example, the k1 value corresponding to cotton fabric is 1; for synthetic fiber fabric, k1 ranges from 0.6 to 1; for large items, k1 ranges from 0.8 to 1.5; for down jackets, k1 ranges from 0.4 to 0.8; and for outdoor jackets, k1 ranges from 0.3 to 0.7. The value range of k2 can be from 0.015 to 0.2, and the larger the washing duration t3, the greater the value of k2. The rinsing compensation duration t4 is a compensation value for the rinsing duration to sufficiently clean the drum. For example, the rinsing compensation duration t4 can range from 30 seconds to 2 minutes, and the greater the weight of the laundry, the greater the value of t4.

The determination of the second rinsing duration is not limited to the above method. For example, the second rinsing duration can be calculated based on the washing duration in the main washing phase, where the second rinsing duration is less than the washing duration in the main washing phase. For instance, t2=k2×t3, or t2=k2×t3+t4. The selection of parameters can refer to the aforementioned description, which will not be repeated here. Furthermore, the second rinsing duration can also be calculated based on the washing duration in the main washing phase, the first coefficient, and the second coefficient, that is, t2=k1×k2×t3. The selection of parameters can refer to the aforementioned description, which will not be repeated here.

The third method determines the rinsing duration for drum cleaning based on both the laundry weight and the washing duration in the main washing phase. For example, the first rinsing duration t1 is obtained based on the weight of the laundry inside the drum, and the second rinsing duration t2 is obtained based on the washing duration in the main washing phase. The third rinsing duration t6 is then calculated using the first rinsing duration t1 and the second rinsing duration t2 as follows: t6=√(2&b1 * [t1] ^2+b2* [t2] ^2 ), where b1 is the coefficient for time adjustment based on laundry weight. For example, the value range of b1 is from 0.01 to 2, and the greater the laundry weight, the greater the value of b1. b2 is the coefficient for time adjustment based on the washing duration in the main washing phase. For example, the value range of b2 is from 0.1 to 1.5, and the longer the washing duration, the greater the value of b2. Alternatively, the third rinsing duration t6 can also be calculated using a linear equation.

In the embodiments of the present application, the rinsing duration for drum cleaning is determined based on at least one of the laundry weight, the fabric type, and the washing duration in the main washing phase. This allows for a more accurate determination of the amount of fiber shedding from the laundry. Accordingly, an appropriate rinsing duration can be set based on the fiber shedding amount, reducing dirt accumulation and improving the cleaning effectiveness of the drum.

Step 202: In a rinsing stage or after the rinsing stage is completed, controlling a water level in the outer drum to reach a cleaning water level.

Exemplarily, the inner drum outer surface and the outer drum inner surface can be rinsed during the rinsing phase or after the rinsing phase is completed. It should be noted that the washing program may include a main washing phase, a rinsing phase, and a spin-drying phase. The main washing phase is the stage in which impurities and dirt on the laundry are washed out. If the process of rinsing the inner drum outer surface and the outer drum inner surface is added during this phase, it may result in residual dirt accumulation in subsequent washing, making it difficult to achieve thorough cleaning. The spin-drying phase occurs after the laundry has been processed, and once spin-drying is completed, the laundry can be removed or proceed to the drying process. Since water intake is not suitable at this stage, it is also unsuitable to place the rinsing of the inner drum outer surface and the outer drum inner surface within the spin-drying phase. In summary, since the laundry remains in a highly humid state during the rinsing phase or after the rinsing phase is completed, and most of the dirt on the laundry has already been washed out, performing drum cleaning during this process does not affect the condition of the laundry and allows for the removal of dirt washed out during the washing process.

The process of rinsing the outer surface of the inner drum and the inner surface of the outer drum can be as follows: during the rinsing phase or after the rinsing phase is completed, the water level inside the outer drum is controlled to reach the cleaning water level. The cleaning water level refers to an appropriate water level height that enables effective cleaning of both the outer drum and the inner drum. This optimal water level height can be determined through multiple experimental calibrations to achieve the best cleaning performance or can be set based on empirical values. Exemplarily, the cleaning water level may be higher than the water level during the rinsing phase. At the cleaning water level, the rotation of the inner drum drives the water flow to perform a cutting motion, thereby cleaning the drum.

Step 203: Performing rinsing of the outer surface of the inner drum and the inner surface of the outer drum according to the rinsing duration.

Rinsing the outer surface of the inner drum and the inner surface of the outer drum can be achieved by utilizing the movement of water driven by the rotation of the inner drum. It can be understood that by controlling the rotation of the inner drum, the water flow between the inner drum and the outer drum is agitated during the rotation process, thereby rinsing the outer surface of the inner drum and the inner surface of the outer drum. At the cleaning water level, the rotation of the inner drum drives the water flow to perform a cutting motion, thereby cleaning the drum.

The rotational speed of the inner drum can be a relatively high speed, such as greater than or equal to 80 rpm. At this speed, the centrifugal force exerted on the laundry is greater than its gravitational force, causing the laundry to adhere to the inner wall of the drum. This adhesion helps to block at least part of the water in the outer drum from entering the inner drum, thereby reducing the likelihood of dirt adhering to the laundry.

Exemplarily, the drum cleaning process can be performed according to the rinsing duration calculated before washing. The rinsing duration may include the time required for water intake into the outer drum to reach the cleaning water level and the time for the rotation of the inner drum. By configuring different rinsing durations for different amounts of dirt, the accuracy of dirt removal can be improved, thereby enhancing the cleaning effect.

The control method for the washing machine provided in the embodiments of the present application rinses the outer surface of the inner drum and the inner surface of the outer drum during each washing process, rather than performing fixed-cycle cleaning. This approach reduces dirt accumulation and enhances cleaning effectiveness. Additionally, since a separate drum cleaning program is not required, the program design is simplified, and the impact on the washed laundry is minimized. Furthermore, the rinsing duration for drum cleaning is determined based on at least one of the laundry weight, fabric type, and washing duration in the main washing phase. This allows for precise cleaning of deposited dirt instead of applying a uniform cleaning duration for all types of dirt, thereby improving the dirt removal efficiency.

The drum rinsing process is set during the rinsing phase or after the rinsing phase is completed. This ensures that the rinsing duration does not take up additional time in the washing program, allowing the drum to be cleaned without extending the total washing duration, thereby enhancing the user experience.

Exemplarily, please refer to FIG. 1 and FIG. 2, in conjunction with FIG. 3, where FIG. 3 is a schematic diagram of a third process of a control method for a washing machine provided in an embodiment of the present application. The embodiments of the present application further provide control method for a washing machine, including:
Step 301: Before washing, determining a rinsing duration for washing the outer surface of the inner drum and the inner surface of the outer drum based on at least one of a weight of the laundry in the inner drum, a material of the laundry, and a washing duration of a main washing stage.

The rinsing duration for drum cleaning can be determined based on at least one of the laundry weight inside the inner drum, the fabric type, and the washing duration in the main washing phase. t should be noted that the dirt accumulation between the inner drum and the outer drum mainly results from the deposition of fibers shed from the laundry. The amount of fiber shedding varies depending on the weight of the laundry. Additionally, different fabric types correspond to different levels of mechanical washing force, which in turn affects the amount of fiber shedding. For instance, the washing mechanical force in the cotton-linen wash program differs from that in the four-piece bedding set wash program. When designing washing programs, the washing force is determined based on the fabric type. Moreover, the washing duration also influences the fiber shedding amount, he longer the washing duration, the greater the fiber shedding. Therefore, the rinsing duration for drum cleaning can be determined based on at least one of the laundry weight, the fabric type, and the washing duration in the main washing phase.

The laundry weight, fabric type, and washing duration in the main washing phase can all be determined before the washing cycle begins. For example, after placing the laundry into the inner drum, the weight of the laundry can be measured to obtain the laundry weight. Additionally, the fabric type can be determined when the user selects a washing program such as cotton-linen wash or four-piece bedding set wash, or by utilizing sensors such as a camera to identify the fabric type. The washing duration of the main washing program can then be calculated based on the preset program. As a result, before the washing cycle starts, the rinsing duration for cleaning the outer surface of the inner drum and the inner surface of the outer drum can already be determined.

The determination of the rinsing duration can refer to the description in Step 201, which will not be repeated here.

Step 302: Reducing an operation duration of the rinsing stage so that a sum of a reduced operation duration and the rinsing duration is greater than or equal to an original operation duration of the rinsing stage.

After the user selects a washing program, the working duration of the washing program can be determined. For example, different fabric types correspond to different washing programs, and different laundry weights correspond to different working durations of the washing programs. Therefore, the working duration of the washing program can be determined based on the fabric type and the laundry weight.

The washing program refers to the process of washing, rinsing, and spin-drying the laundry. For instance, the washing program may include a main washing phase, a rinsing phase, and a spin-drying phase. In the main washing phase, the inner drum rotates to agitate the water, and in combination with the detergent dissolved in the water, it acts on the laundry to achieve cleaning. The rinsing phase is the stage where detergent foam is removed. Multiple rinsing cycles can be performed in this phase to continuously drain out the foam, thereby reducing detergent residue on the laundry and preventing the misconception that the laundry is not thoroughly cleaned. The spin-drying phase is the process of extracting water from the laundry by centrifugal force.

To ensure that the rinsing duration for drum cleaning does not increase the total working duration of the washing program, the rinsing duration can be compensated by reducing the operating duration of the rinsing phase. The sum of the reduced rinsing phase duration and the rinsing duration for drum cleaning should be greater than or equal to the original operating duration of the rinsing phase. Since the rinsing phase primarily serves to remove foam, reducing its duration does not affect the overall cleanliness of the laundry. Therefore, the operating duration of the rinsing phase can be reduced. However, the main washing phase directly affects the cleanliness of the laundry, so the working duration of the main washing phase is not adjusted to compensate for the rinsing duration for drum cleaning. Additionally, the spin-drying phase affects the moisture content of the laundry. If the moisture content is too high, it will impact the drying duration, whether using a dryer or air drying. Therefore, the working duration of the spin-drying phase is also not adjusted to compensate for the rinsing duration for drum cleaning.

It should be noted that the rinsing phase may include multiple rinsing cycles. Each rinsing cycle may include water intake, rinsing, and drainage. The rinsing process involves controlling the rotation of the inner drum at a set water level to remove foam from the laundry.

Exemplarily, during at least the final rinsing process in the rinsing phase, the outer surface of the inner drum and the inner surface of the outer drum are rinsed, while reducing the rinsing duration of at least the final rinsing process. The sum of the reduced rinsing duration and the rinsing duration for drum cleaning is equal to the original rinsing duration of the rinsing process. In other words, by reducing the rinsing duration of the rinsing process where the drum cleaning takes place, the rinsing duration for drum cleaning is compensated, ensuring that the total operating duration of the original rinsing phase remains unchanged. As a result, the total working duration of the entire washing program is also unchanged. This allows for effective drum cleaning without extending the washing time, so users do not have to wait longer for the washing cycle to complete, thereby enhancing the user experience.

Exemplarily, after the rinsing phase is completed, the outer surface of the inner drum and the inner surface of the outer drum are rinsed. The rinsing duration for drum cleaning is compensated by reducing the rinsing duration of at least one of the multiple rinsing processes in the rinsing phase. The sum of the reduced rinsing duration and the rinsing duration for drum cleaning is equal to the original rinsing duration of the rinsing process. This ensures that the operating duration of the rinsing phase is not affected, meaning the total working duration of the washing program remains unchanged. It can be understood that performing drum cleaning after the rinsing phase is completed allows the rinsing duration for drum cleaning to be compensated by reducing the operating duration of the rinsing phase. This ensures that the total working duration of the washing program remains unchanged. Similarly, drum cleaning can be effectively performed without increasing the total washing time, so users do not have to wait longer, thereby improving the user experience.

In the control method for the washing machine provided in the embodiments of the present application, the rinsing process is embedded within the rinsing phase or performed after the rinsing phase is completed. Additionally, the rinsing duration does not increase the total working duration of the washing program. As a result, both the inner drum and the outer drum can be effectively cleaned to enhance cleanliness, while ensuring that the user's waiting time is not extended, thereby improving the user experience.

To further enhance dirt removal efficiency, the cleaning water level inside the outer drum can be dynamically balanced. This allows for continuous drainage of wastewater during the rinsing process of the inner drum and the outer drum, reducing the likelihood of repeated dirt deposition between the inner drum and the outer drum, thereby further improving the cleaning effectiveness of the drum.

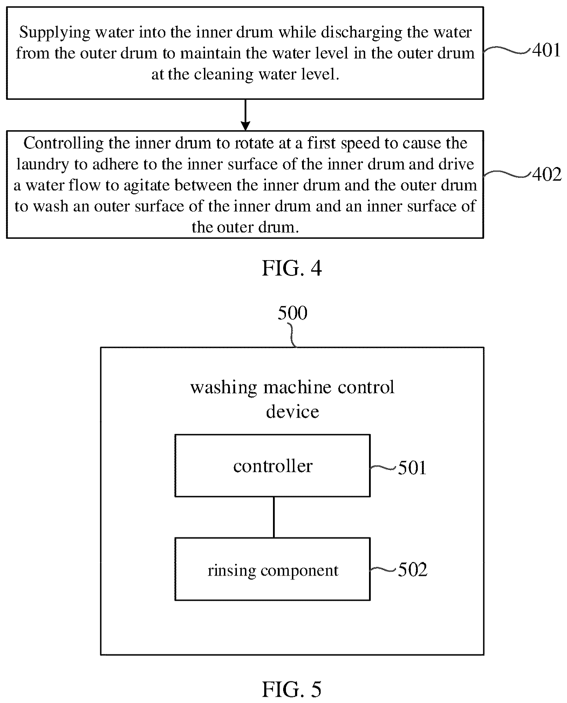

Please refer to FIG. 1 to FIG. 3, in conjunction with FIG. 4, where FIG. 4 is a schematic diagram of a fourth process of a control method for a washing machine provided in an embodiment of the present application. The embodiments of the present application further provide a control method for a washing machine, including:

Step 401: Supplying water into the inner drum while discharging the water from the outer drum to maintain the water level in the outer drum at the cleaning water level.

In the related technology, drum cleaning is typically performed at a static cleaning water level. However, as dirt deposited on the drum disperses into the washing water, there is a risk of re-deposition onto the drum, leading to suboptimal cleaning effectiveness when using a static cleaning water level.

To mitigate this issue, the embodiments of the present application dynamically maintain the water level in the outer drum at the cleaning water level. This allows for the simultaneous removal of dirt deposited on the drum while directly draining the wastewater containing the dirt, thereby improving the cleaning effectiveness of the drum.

Exemplarily, water can be supplied to the inner drum while draining water from the outer drum to maintain the water level in the outer drum at the cleaning water level. Water can be introduced into the inner drum through a spray rinsing method. It can be understood that the washing machine may be equipped with an inlet valve and a spray valve. When the inlet valve is opened, water enters the outer drum, and when the spray valve is opened, water is sprayed into the inner drum. For example, during the rinsing process, the spray nozzle directs water toward the inner drum to remove at least part of the foam from the laundry, thereby improving foam removal efficiency. In the embodiments of the present application, spray rinsing and water inlet occur simultaneously. For instance, the flow rate of the sprayed water can be equal to the flow rate of the inlet water, ensuring that the water levels in the inner drum and outer drum increase synchronously and steadily. This reduces the risk of contaminated water from the outer drum flowing into the inner drum, thereby minimizing secondary contamination of the laundry.

The drainage of water from the outer drum can be achieved by activating the drain pump, which pumps water to the washing machine's drainage outlet. Since the water inflow rate is lower than the drainage rate, the drain pump can be controlled to operate according to a preset drainage timing sequence, enabling periodic activation and deactivation for drainage. For example, the drainage timing sequence can be obtained based on the activation and deactivation intervals of the drain pump. The drainage timing sequence can be determined by monitoring changes in the water level. If the water level changes rapidly, the drainage timing sequence can be accelerated, i.e., the duty cycle (ratio of pump activation time to total cycle time) is increased. Conversely, if the water level changes slowly, the drainage timing sequence can be slowed down, i.e., the duty cycle is reduced.

It should be noted that by optimizing the control timing of the drain pump using a combination of water level-based control and fixed timing control, excessive fluctuations in the water level during high-speed rotation can be prevented. This ensures that the cleaning water level does not become too low or too high, thereby maintaining the optimal rinsing effect.

Step 402: Controlling the inner drum to rotate at a first speed to cause the laundry to adhere to the inner surface of the inner drum and drive a water flow to agitate between the inner drum and the outer drum to wash an outer surface of the inner drum and an inner surface of the outer drum.

During the process of dynamically maintaining the cleaning water level balance, the inner drum can be simultaneously controlled to rotate at a relatively high speed, such as the first speed. The first speed can be greater than or equal to 80 rpm, ensuring that the laundry adheres to the inner wall of the drum and drives the water flow to oscillate between the inner drum and the outer drum, thereby rinsing the outer surface of the inner drum and the inner surface of the outer drum.

The rinsing of the outer surface of the inner drum and the inner surface of the outer drum can be achieved by the movement of water driven by the rotation of the inner drum. It can be understood that by controlling the rotation of the inner drum, the water flow is agitated between the inner drum and the outer drum, achieving the rinsing effect. At the cleaning water level, the rotation of the inner drum drives the water flow to perform a cutting motion, thereby cleaning the drum.

The rotational speed of the inner drum can be set at a higher speed, such as greater than or equal to 80 rpm. At this speed, the centrifugal force exerted on the laundry is greater than its gravitational force, causing the laundry to adhere to the inner wall of the drum. This prevents at least part of the water in the outer drum from entering the inner drum, thereby reducing the likelihood of dirt adhering to the laundry.

In the control method for the washing machine provided in the embodiments of the present application, a rinsing control scheme for rinsing the outer surface of the inner drum and the inner surface of the outer drum is set in each washing program. The rinsing control scheme includes flowing water intake, high-speed rotation of the inner drum, coordinated activation and deactivation timing of the drain pump to achieve clean water rinsing and wastewater drainage. This control method enhances the cleaning effectiveness of the drum. Additionally, the rinsing duration for drum cleaning is determined based on at least one of the laundry weight, fabric type, and washing duration in the main washing phase. That is, the rinsing duration is determined according to the amount of fiber shedding, rather than using a fixed rinsing duration. This improves the efficiency of dirt removal.

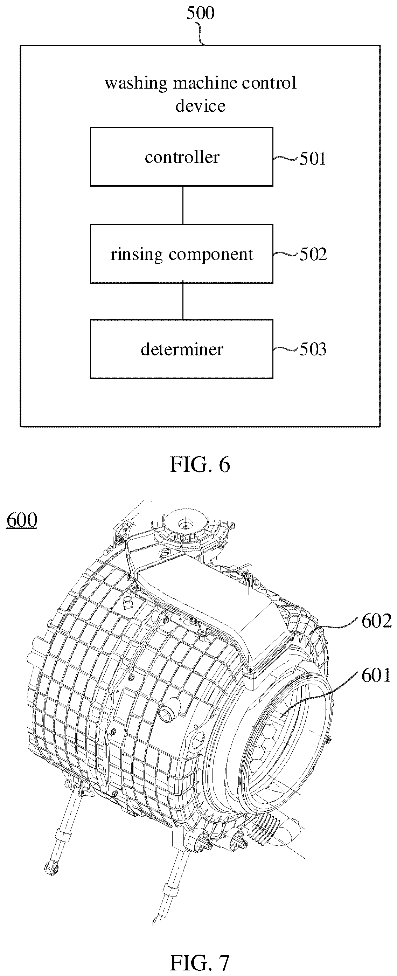

To facilitate the better implementation of the control method for washing machine in the embodiments of the present application, the embodiments of the present application further provide a washing machine control device. Please refer to FIG. 5 and FIG. 6, where: FIG. 5 is a schematic diagram of a first structural configuration of a control device for a washing machine provided in an embodiment of the present application. FIG. 6 is a schematic diagram of a second structural configuration of a control device for a washing machine provided in an embodiment of the present application. The washing machine control device 500 includes a controller 501, a rinsing component 502, and a determiner 503. The washing machine may be a front-load drum washing machine or a top-load pulsator washing machine. The washing machine includes an inner drum and an outer drum, with the inner drum being coaxially disposed within the outer drum. The inner drum can rotate relative to the outer drum. The inner drum is used to hold laundry. The outer drum is used to contain washing water. For example, the inner drum may be equipped with water-permeable holes, allowing water from the outer drum to flow into the inner drum. Through the rotation of the inner drum and the interaction with detergent, the laundry is washed. The washing machine is not limited to the above-mentioned components. It may also include a cabinet, display panel, motor, rotating shaft, and other components, which are not elaborated on here.

The controller 501 is configured to control the water level inside the outer drum to reach the cleaning water level during the rinsing phase or after the rinsing phase is completed. The rinsing component 502 is configured to control the rotation of the inner drum, thereby driving the water flow to oscillate between the inner drum and the outer drum, rinsing the outer surface of the inner drum and the inner surface of the outer drum.

The determiner 503 is configured to determine the rinsing duration for cleaning the outer surface of the inner drum and the inner surface of the outer drum before the washing process begins, based on at least one of the laundry weight inside the inner drum, the fabric type, and the washing duration in the main washing phase.

All the above-mentioned technical solutions can be arbitrarily combined to form optional embodiments of the present application, which will not be elaborated on here.

As described above, in the washing machine control device 500 provided in the embodiments of the present application, the outer surface of the inner drum and the inner surface of the outer drum are rinsed during each washing process, rather than using a fixed periodic cleaning cycle. This approach reduces dirt accumulation and improves cleaning effectiveness. Additionally, since a separate drum cleaning program is not required, the program design is simplified, and the impact on the washed laundry is minimized. Furthermore, the rinsing duration for drum cleaning is determined based on at least one of the laundry weight, the fabric type, and the washing duration in the main washing phase, allowing for precise cleaning of deposited dirt. Instead of applying a uniform rinsing duration for all types of dirt, this method enhances dirt removal efficiency.

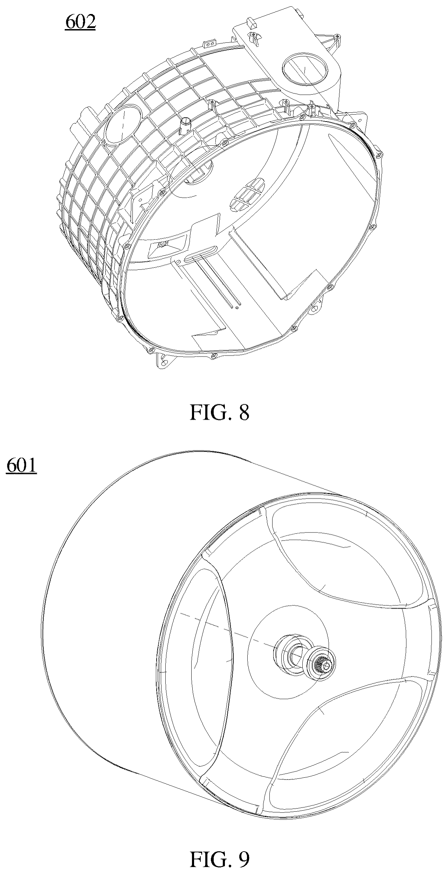

Accordingly, the embodiments of the present application further provide a washing machine, which may be a front-load drum washing machine or a top-load pulsator washing machine. As shown in FIGS. 7 to 9, FIG. 7 is a schematic diagram of a structure of a washing machine provided in an embodiment of the present application, FIG. 8 is a schematic diagram of a structure of an outer drum provided in an embodiment of the present application, and FIG. 9 is a schematic diagram of a structure of an inner drum provided in an embodiment of the present application. The present application takes a front-load drum washing machine as an example for illustration, which should not be construed as a limitation on the type of washing machine. The washing machine 600 may include an inner drum 601 and an outer drum 602, wherein the outer drum 602 is sleeved over the inner drum 601. The inner drum 601 and the outer drum 602 are coaxially arranged, and the inner drum 601 can rotate relative to the outer drum 602. The inner drum 601 is used to hold laundry. The outer drum 602 is used to contain washing water. For example, the inner drum 601 may be provided with water-permeable holes, allowing water from the outer drum 602 to flow into the inner drum 601. With the rotation of the inner drum 601 and the interaction with detergent, the laundry is washed. Additionally, the inner wall of the rear drum of the outer drum 602 may be made of a smooth material to reduce dirt accumulation inside the outer drum 602. The washing machine 600 may further include an inlet valve, an inlet pipe, a spray valve, a spray pipe, and a drain pump. The inlet valve controls the flow of water into the washing machine. When the inlet valve is opened, water enters the outer drum 602 through the inlet pipe, which is connected to a water source. The spray valve controls the flow of sprayed water. When the spray valve is opened, water is sprayed into the inner drum 601 through the spray pipe. The drain pump controls the discharge of water. When the drain pump is activated, water from the outer drum 602 is drained out. The washing machine 600 is not limited to the above-mentioned components. It may also include a cabinet, display panel, motor, rotating shaft, and other components (not shown in the figures), which are not specifically restricted herein.

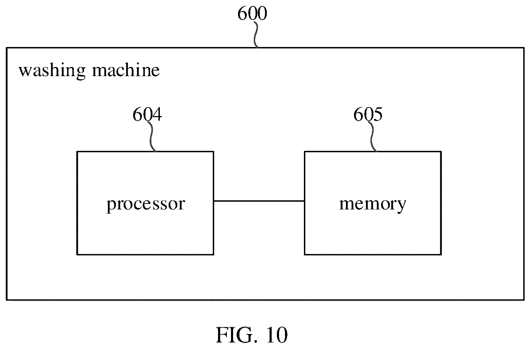

Please refer to FIG. 10, which a block diagram of a structure of a washing machine provided in an embodiment of the present application. The washing machine 600 may further include a processor 604, which has one or more processing cores, a memory 605, which comprises one or more computer-readable storage media, and a computer program stored in memory 605 and executable on processor 604. The processor 604 is electrically connected to the memory 605. It should be understood by those skilled in the art that the structure of washing machine 600 shown in the figure does not constitute a limitation on the washing machine. The washing machine may include more or fewer components than those shown in the figure, or some components may be combined, or arranged differently.

The processor 604 serves as the control center of the washing machine 600, connecting various components of washing machine 600 through interfaces and circuits. For example, the processor 604 may be electrically connected to the inner drum 601, the inlet valve, the spray valve, and the drain pump. By running or loading software programs and/or modules stored in memory 605, and by accessing data stored in memory 605, the processor 604 executes various functions and data processing tasks of washing machine 600, thereby enabling overall monitoring and control of the washing machine.

In the embodiments of the present application, the processor 604 in the washing machine 600 follows the steps below to load instructions corresponding to one or more application processes into memory 605 and execute the applications stored in memory 605 using processor 604, thereby achieving various functions:
During the rinsing phase or after the rinsing phase is completed, controlling the water level inside the outer drum to reach the cleaning water level.

Controlling the rotation of the inner drum to drive the water flow to oscillate between the inner drum and the outer drum, thereby rinsing the outer surface of the inner drum and the inner surface of the outer drum.

The specific implementation of the above operations can refer to the previous embodiments, which will not be repeated here.

A person of ordinary skill in the art will understand that all or some steps of the methods described in the above embodiments may be executed by instructions or by controlling relevant hardware through instructions. These instructions can be stored in a computer-readable storage medium and loaded and executed by a processor.

To this end, the embodiments of the present application provide a computer-readable storage medium, in which multiple computer programs are stored. These computer programs can be loaded by a processor to execute the steps of the control method for washing machine provided in the embodiments of the present application.

The storage medium may include, but is not limited to read-only memory (ROM), random access memory (RAM), magnetic disks, optical disks, or other media capable of storing program codes.

Since the computer program stored in this storage medium can execute the steps of the washing machine control method provided in the embodiments of the present application, it can achieve the beneficial effects that can be realized by any washing machine control method provided in the present application. For details, refer to the previous embodiments, which will not be repeated here.

In the above embodiments, each embodiment is described with a particular emphasis. Parts that are not elaborated on in one embodiment may be referred to in related descriptions of other embodiments.

In the description of this application, the terms "first" and "second" are used solely for descriptive purposes and should not be understood as indicating relative importance or implying the quantity of the specified technical features. Therefore, features defined with "first" and "second" may explicitly or implicitly include one or more features.

The above provides a detailed description of the washing machine and the control method, the control device therefor, and the storage medium offered in the embodiments of the present application. Specific examples have been used in this document to explain the principles and implementation methods of the present application. The explanations of the above embodiments are provided to assist in understanding the methods and core concepts of this application. Further, for those skilled in the art, variations in specific implementation methods and application scope may be made based on the concepts of this application. Therefore, the content of this specification should not be construed as a limitation of the present application.

## Claims

1. A control method for a washing machine, the washing machine comprising an inner drum and an outer drum sleeved outside the inner drum, the inner drum being used to carry a laundry, wherein the control method comprises:
in a rinsing stage or after the rinsing stage is completed, controlling a water level in the outer drum to reach a cleaning water level;
controlling the inner drum to rotate so as to drive a water flow to agitate between the inner drum and the outer drum to wash an outer surface of the inner drum and an inner surface of the outer drum.

2. The control method according to claim 1, wherein controlling the inner drum to rotate so as to drive the water flow to agitate between the inner drum and the outer drum to wash the outer surface of the inner drum and the inner surface of the outer drum comprises:
before washing, determining a rinsing duration for washing the outer surface of the inner drum and the inner surface of the outer drum based on at least one of a weight of the laundry in the inner drum, a material of the laundry, and a washing duration of a main washing stage;
performing rinsing of the outer surface of the inner drum and the inner surface of the outer drum according to the rinsing duration.

3. The control method according to claim 2, wherein before washing, determining the rinsing duration for washing the outer surface of the inner drum and the inner surface of the outer drum based on the at least one of the weight of the laundry in the inner drum, the material of the laundry, and the washing duration of the main washing stage comprises:
acquiring the weight of the laundry in the inner drum;
if the weight of the laundry falls within a preset weight range, calculating a first rinsing duration based on the weight of the laundry, a standard weight, and the rinsing duration corresponding to the standard weight;
if the weight of the laundry falls outside the preset weight range, selecting the first rinsing duration based on a set weight.

4. The control method according to claim 3, wherein if the weight of the laundry falls within the preset weight range, the first rinsing duration is calculated based on the weight of the laundry, the standard weight, and the rinsing duration corresponding to the standard weight, comprising:
acquiring the material of the laundry in the inner drum;
obtaining a first coefficient for time adjustment based on the material of the laundry;
calculating the first rinsing duration based on the weight of the laundry, the standard weight, the rinsing duration corresponding to the standard weight, and the first coefficient.

5. The control method according to claim 2, wherein before washing, determining the rinsing duration for washing the outer surface of the inner drum and the inner surface of the outer drum based on the at least one of the weight of the laundry in the inner drum, the material of the laundry, and the washing duration of the main washing stage further comprises:
acquiring the washing duration of the main washing stage of the washing machine;
calculating a second rinsing duration based on the washing duration.

6. The control method according to claim 5, wherein calculating the second rinsing duration based on the washing duration comprises:
acquiring the material of the laundry in the inner drum;
obtaining a first coefficient for time adjustment based on the material of the laundry, and obtaining a second coefficient for time adjustment based on the washing duration;
calculating the second rinsing duration based on the washing duration, the first coefficient, and the second coefficient.

7. The control method according to claim 6, wherein calculating the second rinsing duration based on the washing duration, the first coefficient, and the second coefficient further comprises:
acquiring a rinsing compensation duration;
calculating the second rinsing duration based on the washing duration, the first coefficient, the second coefficient, and the rinsing compensation duration.

8. The control method according to claim 2, wherein before washing, determining the rinsing duration for washing the outer surface of the inner drum and the inner surface of the outer drum based on at least one of the weight of the laundry in the inner drum, the material of the laundry, and the washing duration of the main washing stage further comprises:
acquiring a first rinsing duration calculated based on the weight of the laundry in the inner drum and a second rinsing duration calculated based on the washing duration of the main washing stage;
calculating a third rinsing duration based on the first rinsing duration and the second rinsing duration.

9. The control method according to claim 2, wherein in the rinsing stage or after the rinsing stage is completed, controlling the water level in the outer drum to reach the cleaning water level comprises:
reducing an operation duration of the rinsing stage so that a sum of a reduced operation duration and the rinsing duration is greater than or equal to an original operation duration of the rinsing stage.

10. The control method according to claim 9, wherein reducing the operation duration of the rinsing stage so that the sum of the reduced operation duration and the rinsing duration is greater than or equal to the original operation duration of the rinsing stage comprises:
during at least a last rinsing process in the rinsing stage, performing rinsing of the outer surface of the inner drum and the inner surface of the outer drum for the rinsing duration;
reducing the rinsing duration of at least the last rinsing process so that the sum of the reduced rinsing duration and the rinsing duration is equal to the original rinsing duration of a rinsing process.

11. The control method according to claim 9, wherein reducing the operation duration of the rinsing stage so that the sum of the reduced operation duration and the rinsing duration is greater than or equal to the original operation duration of the rinsing stage further comprises:
after the rinsing stage is completed, performing rinsing of the outer surface of the inner drum and the inner surface of the outer drum for the rinsing duration;
reducing the rinsing duration of at least one rinsing process among multiple rinsing processes in the rinsing stage so that the sum of the reduced rinsing duration and the rinsing duration is equal to the original rinsing duration of the rinsing process.

12. The control method according to claim 1, wherein in the rinsing stage or after the rinsing stage is completed, controlling the water level in the outer drum to reach the cleaning water level comprises:
supplying water into the inner drum while discharging the water from the outer drum to maintain the water level in the outer drum at the cleaning water level.

13. The control method according to claim 12, wherein supplying the water into the inner drum while discharging the water from the outer drum to maintain the water level in the outer drum at the cleaning water level comprises:
acquiring a drainage timing for turning a drainage pump on and off;
spraying the water into the inner drum while supplying the water into the outer drum, wherein a spraying water flow rate is equal to a water supply flow rate;
controlling turning on and off of the drainage pump according to the drainage timing to maintain the water level in the outer drum at the cleaning water level;
wherein the water supply flow rate is lower than a drainage flow rate.

14. A control device for a washing machine, the washing machine comprising an inner drum and an outer drum sleeved outside the inner drum, the inner drum being used to carry a laundry, wherein the control device comprises:
a controller configured to, in a rinsing stage or after the rinsing stage is completed, control a water level in the outer drum to reach a cleaning water level;
a rinsing component configured to control the inner drum to rotate so as to drive a water flow to agitate between the inner drum and the outer drum to wash an outer surface of the inner drum and an inner surface of the outer drum.

15. The control device according to claim 14, wherein the control device further comprises:
a determiner configured to, before washing, determine a rinsing duration for washing the outer surface of the inner drum and the inner surface of the outer drum based on at least one of a weight of the laundry in the inner drum, a material of the laundry, and a washing duration of a main washing stage.

16. A computer-readable storage medium storing a computer program, wherein when the computer program is executed on a computer, the computer executes the control method for the washing machine according to claim 1.

17. A washing machine, comprising:
an inner drum configured to carry a laundry;
an outer drum sleeved outside the inner drum;
a processor electrically connected to the inner drum, the processor being configured to:
in a rinsing stage or after the rinsing stage is completed, control a water level in the outer drum to reach a cleaning water level;
control the inner drum to rotate so as to drive a water flow to agitate between the inner drum and the outer drum to wash an outer surface of the inner drum and an inner surface of the outer drum.

18. The washing machine according to claim 17, wherein the processor is further configured to:
before washing, determine a rinsing duration for washing the outer surface of the inner drum and the inner surface of the outer drum based on at least one of a weight of the laundry in the inner drum, a material of the laundry, and a washing duration of a main washing stage;
perform rinsing of the outer surface of the inner drum and the inner surface of the outer drum according to the rinsing duration.

19. The washing machine according to claim 18, wherein the processor is further configured to:
acquire the weight of the laundry in the inner drum;
if the weight of the laundry falls within a preset weight range, calculate a first rinsing duration based on the weight of the laundry, a standard weight, and a rinsing duration corresponding to the standard weight;
if the weight of the laundry falls outside the preset weight range, select the first rinsing duration based on a set weight.

20. The washing machine according to claim 17, wherein the inner surface of the outer drum is made of a smooth material.
